# EUROPEAN PATENT APPLICATION

(11) **EP 2 775 383 A1**
(43) Date of publication of application: **10.09.2014**
(21) Application number: 13795148.9
(22) Date of filing: 07.08.2013
(51) Int. Cl.: G06F 3/0488, G06F 3/041

(54) **TOUCH BAR AND MOBILE TERMINAL DEVICE**

(30) Priority: 30.01.2013 CN 201310035294
(71) Applicant: Huawei Technologies Co., Ltd., Shenzhen, Guangdong 518129 (CN)
(72) Inventor: GAO, Yong, Shenzhen, Guangdong 518129 (CN); HU, Hanbin, Shenzhen, Guangdong 518129 (CN)
(74) Representative: Epping - Hermann - Fischer
(86) International application number: PCT/CN2013/080958
(87) International publication number: WO 2014/117491

(57) **Abstract**

Embodiments of the present invention disclose a touch bar and a mobile terminal apparatus. The touch bar in the embodiment of the present invention includes: an interface module and a touch panel; the interface module is connected to the touch panel; the interface module is configured to connect in a matching manner to an interface on a mobile terminal; the touch panel is configured to sense a touch operation of a user on the touch panel, generate a corresponding sensing signal, and transmit the sensing signal to a processor in the mobile terminal by using the interface module, so that the processor controls the mobile terminal according to the sensing signal and content currently displayed on a display interface of the mobile terminal. Functions such as flicking a browser page up and down, turning pages of an ebook, and adjusting volume are implemented effectively; the operability is enhanced, and the user experience is prevented from being affected because the screen is blocked due to a tap operation or flick operation of the user, improving the user experience effectively.

## Description

### TECHNICAL FIELD

The present invention relates to the field of mobile terminal devices, and in particular, to a touch bar and a mobile terminal apparatus.

### BACKGROUND

With the development of mobile phone technologies, large-screen mobile phones have brought about a brand new operation mode: touchscreen operation. Users may touch or tap a touchscreen or flick on the touchscreen with fingers or other objects, to operate the mobile phone.

However, at present, a user needs to tap a display interface with a finger or flick on the display interface with a finger when browsing a web page or an ebook; when the user taps or flicks on the display interface with the finger, the screen is usually blocked, and hence the user experience is affected and weakened.

### SUMMARY

Embodiments of the present invention provide a touch bar and a mobile terminal apparatus. A user may control a mobile terminal by using a touch bar, so as to implement functions such as flicking a browser page up and down, turning pages of an ebook, and adjusting volume; the operability is enhanced, and the user experience is prevented from being affected because the screen is blocked due to a tap operation or flick operation of the user, improving the user experience effectively.

A first aspect of the present invention provides a touch bar, including:
an interface module and a touch panel, the interface module being connected to the touch panel, where
the interface module is configured to connect a matching interface on a mobile terminal; and
the touch panel is configured to sense a touch operation of a user on the touch panel, generate a corresponding sensing signal, and transmit the sensing signal to a processor in the mobile terminal by using the interface module, so that the processor controls the mobile terminal according to the sensing signal and content currently displayed on a display interface of the mobile terminal.

In a first possible implementation manner of the first aspect, the touch panel is a touch sensor.

In a second possible implementation manner of the first aspect, the interface module may be a universal serial bus USB interface or a universal asynchronous receiver/transmitter UART interface.

In a third possible implementation manner of the first aspect, the touch operation is a tap operation or a flick operation.

With reference to the first aspect, the first possible implementation manner of the first aspect, the second possible implementation manner of the first aspect, or the third possible implementation manner of the first aspect, in a fourth possible implementation manner, the sensing signal includes position information and direction information, so that the processor determines a touch operation performed by the user according to the position information and direction information included in the sensing signal, where the position information is used to describe a position area of the touch operation of the user on the touch panel, and the direction information is used to describe a direction of the touch operation of the user on the touch panel.

With reference to the fourth possible implementation manner of the first aspect, in a fifth possible implementation manner, the processor is further configured to, according to the touch operation performed by the user and the content currently displayed on the display interface of the mobile terminal, control a page displayed on a browser of the mobile terminal to flick up, or control the page on the browser of the mobile terminal to flick down, or control the display interface of the mobile terminal to display a previous page of a document, or control the display interface of the mobile terminal to display a next page of the document, or control the mobile terminal to increase volume, or control the mobile terminal to decrease the volume.

A second aspect of the present invention provides a mobile terminal apparatus, including:
a touch bar and a mobile terminal, where
the touch bar includes an interface module and a touch panel, where the interface module is connected to the touch panel;
the mobile terminal includes a processor and a terminal interface, where the terminal interface is connected to the interface module, where the interface module matches the terminal interface;
the touch panel is configured to sense a touch operation of a user on the touch panel and generate a corresponding sensing signal, and is configured to transmit the sensing signal to the processor by using the interface module and the terminal interface; and
the processor is configured to control the mobile terminal according to the sensing
signal and content currently displayed on a display interface of the mobile terminal.

In a first possible implementation manner of the second aspect, the interface module may be a universal serial bus USB interface or a universal asynchronous receiver/transmitter UART interface.

In a second possible implementation manner of the second aspect, the touch panel is a touch sensor.

In a third possible implementation manner of the second aspect, the interface module is connected to the terminal interface in a pluggable manner.

In a fourth possible implementation manner of the second aspect, the touch operation is a tap operation or a flick operation.

With reference to the second aspect, the first possible implementation manner of the second aspect, the second possible implementation manner of the second aspect, the third possible implementation manner of the second aspect, or the fourth possible implementation manner of the second aspect, in a fifth possible implementation manner, the mobile terminal further includes a display module; the display module is configured to display content shown to the user; the sensing signal includes position information and direction information; the processor is configured to determine the touch operation performed by the user according to the position information and the direction information included in the sensing signal, and control a page displayed on a browser of the display module to flick up, or control the page on the browser of the display module to flick down, or control the display module to display a previous page of a document, or control the display module to display a next page of the document according to the touch operation performed by the user and the content currently displayed on the display module, where the position information is used to describe a position area of the touch operation of the user on the touch panel, and the direction information is used to describe a direction of the touch operation of the user on the touch panel.

With reference to the fifth possible implementation manner of the second aspect, in a sixth possible implementation manner, the mobile terminal further includes a sound module, and the sound module is configured to transmit sound to be heard by the user; then, the processor is further configured to control the sound module to increase volume or control the sound module to decrease the volume according to the touch operation performed by the user and the content currently displayed on the display module.

With reference to the sixth possible implementation manner of the second aspect, in a seventh possible implementation manner, the mobile terminal is a tablet computer or a mobile phone.

According to the above technical solution, the embodiment of the present invention has the following advantages:

A touch bar includes an interface module and a touch panel, where the interface module is connected to the touch panel; the interface module is configured to connect a matching interface on a mobile terminal, and the touch panel is configured to sense a touch operation of a user on the touch panel, generate a corresponding sensing signal, and transmit the sensing signal to a processor in the mobile terminal by using the interface module, so that the processor controls the mobile terminal according to the sensing signal and content currently displayed on a display interface of the mobile terminal. For example, functions such as flicking a browser page up and down, turning pages of an ebook, and adjusting volume may be implemented; the operability is enhanced, and the user experience is prevented from being affected because the screen is blocked due to a touch operation of the user, improving the user experience effectively.

### BRIEF DESCRIPTION OF DRAWINGS

FIG. 1 is a schematic side view of a touch bar in an embodiment of the present invention;
FIG. 2 is a schematic main view of a touch bar in an embodiment of the present invention;
FIG. 3 is a schematic view of a structure of a mobile terminal apparatus in an embodiment of the present invention;
FIG. 4 is a schematic view showing disassembled mobile terminal and touch bar on a mobile terminal apparatus in an embodiment of the present invention;
FIG. 5 is another schematic view of a structure of a mobile terminal apparatus in an embodiment of the present invention;
FIG. 6 is another schematic view of a structure of a mobile terminal apparatus in an embodiment of the present invention; and
FIG. 7 is another schematic view of a structure of a mobile terminal apparatus in an embodiment of the present invention.

### DESCRIPTION OF EMBODIMENTS

Embodiments of the present invention provide a touch bar and a mobile terminal apparatus. A user may control a mobile terminal by using a touch bar, so as to implement functions such flicking content in a browser page up and down, turning pages of an ebook, and adjusting volume; the operability of the mobile terminal is enhanced, and the user experience is prevented from being affected because the screen is blocked due to a touch operation of the user, improving the user experience effectively.

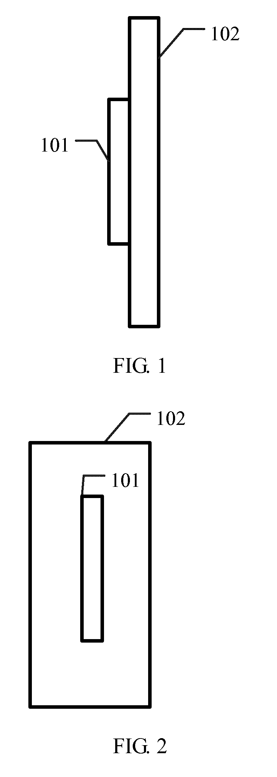

Referring to FIG. 1 and FIG. 2, FIG. 1 is a side view of a touch bar in an embodiment of the present invention, and FIG. 2 is a main view of a touch bar in an embodiment of the present invention. The touch bar includes:
an interface module 101 and a touch panel 102.

The interface module 101 is connected to the touch panel 102. The interface module 101 is configured to connect a matching interface on a mobile terminal. The touch panel 102 is configured to sense a touch operation of a user on the touch panel 102, generate a corresponding sensing signal, and transmit the sensing signal to a processor in the mobile terminal by using the interface module 101, so that the processor controls the mobile terminal according to the sensing signal and content currently displayed on a display interface of the mobile terminal.

In the embodiment of the present invention, the touch panel 102 is a data input apparatus. The touch panel 102 has touch points, and the touch points are arranged in the form of a matrix on a plane of the touch panel 102. When the user performs a touch operation on the touch panel 102, the touch points on the touch panel 102 sense the touch operation of the user and generate a corresponding sensing signal, where the sensing signal includes position information and direction information, the position information is used to describe a position area of the touch operation of the user on the touch panel 102, and the direction information is used to describe a direction of the touch operation of the user on the touch panel 102. For example, if the user performs a tap operation, the position information generated by the touch panel 102 after detecting the tap operation is: touch points 51, 52, 75, and 76, and the direction information is no direction.

In the embodiment of the present invention, the touch operation performed by the user on the touch panel 102 may be a tap operation or a flick operation, where the touch operation refers to that the user touches the touch panel 102 with a part of the body or with other objects. Preferably, in the embodiment of the present invention, the touch panel 102 may be a touch sensor.

Preferably, in the embodiment of the present invention, the interface module 101 may be a universal serial bus (Universal Serial BUS, USB) interface, or a universal asynchronous receiver/transmitter (Universal Asynchronous Receiver/Transmitter, UART) interface. If the interface module 101 on the touch bar is a USB interface, the interface module 101 on the touch bar may be connected to a USB interface on the mobile terminal; if the interface module 101 on the touch bar is a UART interface, the interface module 101 on the touch bar may be connected to a UART interface on the mobile terminal, so as to implement connection between an interface module and a matching interface.

In the embodiment of the present invention, the processor may preset a mapping relationship among the position information and direction information included in the received sensing signal and the touch operation performed by the user. For example, the processor may divide the touch panel 102 into two areas, which are area A and area B respectively, according to a preset proportion, and may preset that a tap operation of the user in area A is a first area tap operation, preset that when the user flicks in a direction from B to A, the flick operation is a flick-up operation, preset that a tap operation of the user in area B is a second area tap operation, and preset that when the user flicks in a direction from A to B, the flick operation is a flick-down operation. The processor may preset, according to the above manner, a mapping relationship among the position information and direction information about the touch of the user on the touch panel and the touch operation performed by the user, so that the processor may determine the touch operation performed by the user according to the position information and direction information included in sensing information after receiving the sensing information transmitted by the touch panel 102 by using the interface module.

In the embodiment of the present invention, the user may perform a touch operation on the touch panel 102, and the touch operation may be a tap operation or a flick operation, where the flick operation specifically includes but is not limited to: a flick-up operation and a flick-down operation, and the tap operation includes but is not limited to: a first area tap operation and a second area tap operation. It should be noted that, the naming of the "flick-up operation", "flick-down operation", "first area tap operation", and "second area tap operation" in the embodiment of the present invention is based on operation names that may be used for the touch operations performed by the user when the touch bar is installed on the left side or right side of the mobile terminal and the touch bar is divided into an upper half part and a lower half part. In actual application, names of touch operations performed by the user may be determined according to actual applications, and are not limited herein.

In the embodiment of the present invention, after the processor determines the touch operation performed by the user according to the position information and direction information included in the received sensing information, the processor may also, according to the touch operation performed by the user and the content currently displayed on the display interface of the mobile terminal, control a page displayed on a browser of the mobile terminal to flick up, or control the page on the browser of the mobile terminal to flick down, or control the display interface of the mobile terminal to display a previous page of a document, or control the display interface of the mobile terminal to display a next page of the document, or control the mobile terminal to increase volume, or control the mobile terminal to decrease the volume. Specifically, for example, after the processor receives the sensing information including the position information and direction information, if it is determined, by using the position information and direction information, that the touch operation performed by the user is a flick-up operation, and the content currently displayed on the display interface of the mobile terminal is a browser page, the processor controls the page displayed on the browser to flick up; if it is determined, by using the position information and direction information, that the touch operation performed by the user is a flick-down operation, and the content currently displayed on the display interface of the mobile terminal is a browser page, the processor controls the page displayed on the browser to flick down; if it is determined, by using the position information and direction information, that the touch operation performed by the user is a flick-up operation, and the content currently displayed on the display interface of the mobile terminal is a document page, the processor controls the display interface to display a previous page of the document; if it is determined, by using the position information and direction information, that the touch operation performed by the user is a flick-down operation, and the content currently displayed on the display interface of the mobile terminal is a document page, the processor controls the display interface to display a next page of the document; if it is determined, by using the position information and direction information, that the touch operation performed by the user is a flick-up operation, and the content currently displayed on the display interface of the mobile terminal is a music playing interface, the processor controls a music player to play a previous audio segment and controls the display interface to enter a playing interface of the previous audio segment; if it is determined, by using the position information and direction information, that the touch operation performed by the user is a flick-down operation, and the content currently displayed on the display interface of the mobile terminal is a music playing interface, the processor controls a music player to play a next audio segment and controls the display interface to enter a playing interface of the next audio segment; if it is determined, by using the position information and direction information, that the touch operation performed by the user is a flick-down operation, and the content currently displayed on the display interface of the mobile terminal is a home page, the processor controls the volume to be decreased; if it is determined, by using the position information and direction information, that the touch operation performed by the user is a flick-up operation, and the content currently displayed on the display interface of the mobile terminal is a home page, the processor controls the volume to be increased; if it is determined, by using the position information and direction information, that the touch operation performed by the user is a second area tap operation, and the content currently displayed on the display interface of the mobile terminal is document page, the processor controls the display interface to display a next page of the document; if it is determined, by using the position information and direction information, that the touch operation performed by the user is a first area tap operation, and the content currently displayed on the display interface of the mobile terminal is document page, the processor controls the display interface to display a previous page of the document; if it is determined, by using the position information and direction information, that the touch operation performed by the user is a first area tap operation, and the content currently displayed on the display interface of the mobile terminal is a music playing interface or a home page, or the mobile phone is in a music playing state but not in the music playing interface, the processor controls the volume to be increased; and if it is determined, by using the position information and direction information, that the touch operation performed by the user is a second area tap operation, and the content currently displayed on the display interface of the mobile terminal is a music playing interface or a home page, or the mobile phone is in a music playing state but not in the music playing interface, the processor controls the volume to be decreased.

In the embodiment of the present invention, when a user uses a browser to browse pages, the user may perform a touch operation on the touch panel 102 of the touch bar, so as to control the content displayed on the page of the browser to flick up or down, and when reading a document, the user may also page down in an ebook by using a touch operation on the touch panel 102; the user may also increase or decrease the volume by using a touch operation on the touch panel 102.

It should be noted that, in the embodiment of the present invention, a manner in which the processor controls the mobile terminal according to the touch operation performed by the user and the content currently displayed on the display interface of the mobile terminal may be preset according to specific conditions, and the processor may also learn the manner according to a use habit of the user. Therefore, in an actual application, the manner in which the processor controls the mobile terminal according to the touch operation performed by the user and the content currently displayed on the display interface of the mobile terminal is not limited herein.

In the embodiment of the present invention, the touch bar is connected to the mobile terminal by using the interface module 101, so that the user may control the mobile terminal by using the touch operation on the touch panel 102 of the touch bar, for example, flicking up and down in a browser page, turning pages of a document, and adjusting volume; the operability of the mobile terminal is enhanced, and the user experience is prevented from being affected because the screen is blocked due to a touch operation of the user, hence avoiding; improving the user experience effectively.

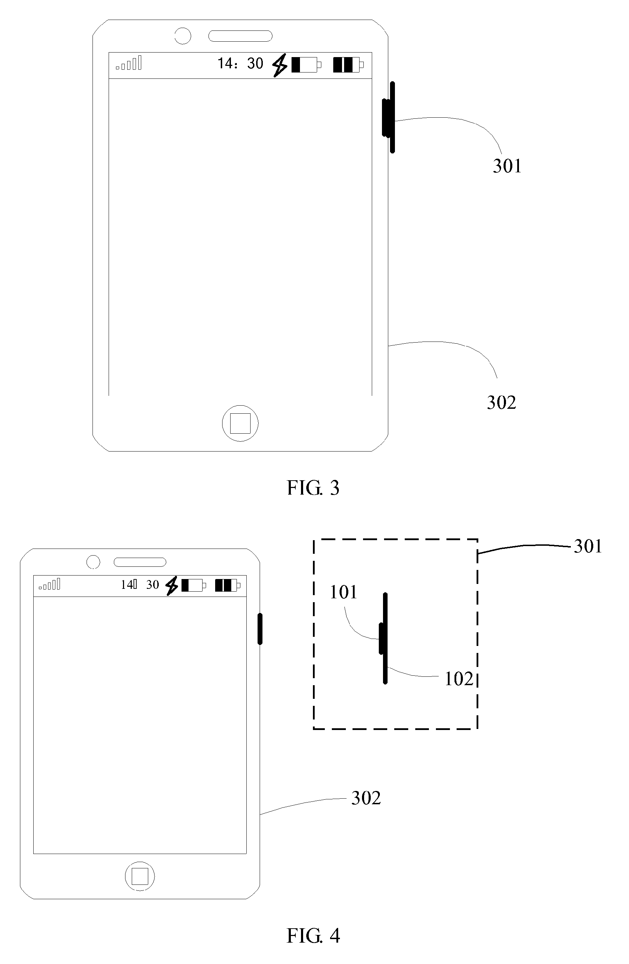

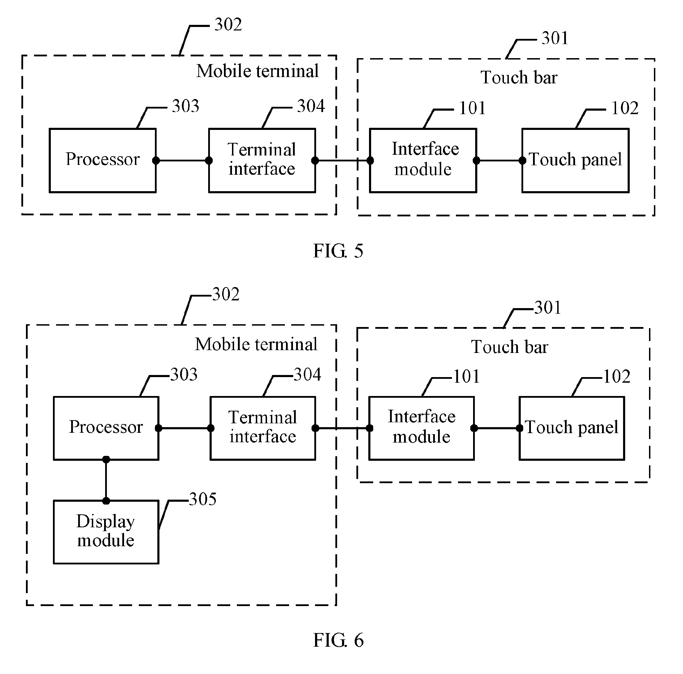

Referring to FIG. 3, FIG. 3 shows an embodiment of a structure of a mobile terminal apparatus in an embodiment of the present invention, where a touch bar on the mobile terminal apparatus may be fixed on a mobile terminal, or connected to the mobile terminal in a detachable way. Referring to FIG. 4, FIG. 4 is a structural diagram of disassembled mobile terminal and touch bar on a mobile terminal apparatus in an embodiment of the present invention. Referring to FIG. 5, FIG. 5 is a structural diagram of a mobile terminal apparatus in an embodiment of the present invention. The mobile terminal apparatus includes:
a touch bar 301 and a mobile terminal 302.

The touch bar 301 includes an interface module 101 and a touch panel 102, and the interface module 101 is connected to the touch panel 102.

The mobile terminal 302 includes a processor 303 and a terminal interface 304, and the terminal interface 304 is connected to the interface module 101, where the interface module 101 matches the terminal interface 304.

The touch panel 102 of the touch bar 301 is configured to sense a touch operation of a user on the touch panel 102 and generate a corresponding sensing signal, and is configured to transmit the sensing signal to the processor 303 in the mobile terminal 302 by using the interface module 101 and the terminal interface 304, so that the processor 303 is capable of controlling the mobile terminal 302 according to the sensing signal and content currently displayed on a display interface of the mobile terminal.

In the embodiment of the present invention, the touch panel 102 is a data input apparatus. The touch panel 102 has touch points, and the touch points are arranged in the form of a matrix on a plane of the touch panel 102. When the user performs a touch operation on the touch panel 102, the touch points on the touch panel 102 sense the touch operation of the user and generate a corresponding sensing signal, where the sensing signal includes position information and direction information, the position information is used to describe a position area of the touch operation of the user on the touch panel 102, and the direction information is used to describe a direction of the touch operation of the user on the touch panel 102. For example, if the user only performs a flick operation, the position information generated by the touch panel 102 after detecting the tap operation is: touch points 25, 35, 45, 55, and 65, and the direction information is: downward.

In the embodiment of the present invention, the touch bar 301 in the mobile terminal apparatus shown in FIG. 3 is installed on a right side of the mobile terminal 302; besides, the touch bar 301 may also be installed on a left side of the mobile terminal 302, or the touch bar 301 is installed at an upper side of the mobile terminal 302, or the touch bar 301 is installed on a decrease side of the mobile terminal 302. Therefore, in an actual application, the installation position of the touch bar 301 on the mobile terminal 302 may be set according to actual requirements, and is not limited herein.

Preferably, in the embodiment of the present invention, the touch panel 102 may be a touch sensor.

Preferably, in the embodiment of the present invention, the interface module 101 may be a USB interface, or a UART interface. If the interface module 101 on the touch bar 301 is a USB interface, the terminal interface 304 connected to the interface module 101 of the touch bar 301 is also a USB interface; if the interface module 101 on the touch bar 301 is a UART interface, the terminal interface 304 connected to the interface module 101 of the touch bar 301 is also a UART interface, so as to implement connection between an interface module and a matching interface.

Preferably, in the embodiment of the present invention, the interface module 102 and the terminal interface 304 may be connected in a pluggable manner.

Preferably, in the embodiment of the present invention, the mobile terminal apparatus may be a tablet computer or a mobile phone.

Preferably, the mobile terminal 302 may further include a display module 305, and the display module 305 is configured to display content shown to the user; then, the processor 303 may adjust content displayed on the display module according to the touch operation performed by the user and content currently displayed on the display module 305. Referring to FIG. 6, FIG. 6 is a structural diagram in the embodiment of the present invention when the mobile terminal apparatus in the embodiment shown in FIG. 5 includes a display module 305.

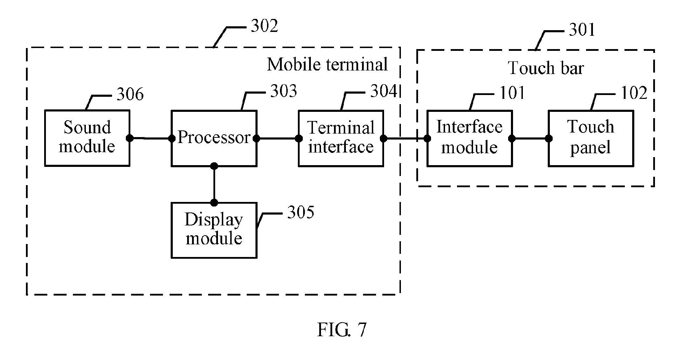

Preferably, the mobile terminal 302 may further include a sound module 306, and the sound module is configured to transmit sound to be heard by the user; then, the processor 303 may control the sound module 306 according to the touch operation performed by the user and the content currently displayed on the display module 305. Referring to FIG. 7, FIG. 7 is a structural diagram in the embodiment of the present invention when the mobile terminal apparatus in the embodiment shown in FIG. 5 includes a display module 305 and a sound module 306.

In the embodiment of the present invention, the processor 303 may preset a mapping relationship among the position information and direction information included in the received sensing signal and the touch operation performed by the user. For example, the processor 303 may divide the touch panel 102 into two areas, which are area A and area B respectively, according to a preset proportion, and may preset that a tap operation of the user in area A is a first area tap operation, preset that when the user flicks in a direction from B to A, the flick operation is a flick-up operation, preset that a tap operation of the user in area B is a second area tap operation, and preset that when the user flicks in a direction from A to B, the flick operation is a flick-down operation. The processor may preset, according to the above manner, a mapping relationship among the position information and direction information about the touch of the user on the touch panel and the touch operation performed by the user, so that the processor may determine the touch operation performed by the user according to the position information and direction information included in sensing information after receiving the sensing information transmitted by the touch panel 102 by using the interface module.

In the embodiment of the present invention, the user may perform a touch operation on the touch panel 102, and the touch operation may be a tap operation or a flick operation, where the flick operation specifically includes but is not limited to: a flick-up operation and a flick-down operation, and the tap operation includes but is not limited to: a first area tap operation and a second area tap operation. It should be noted that, the installation position of the touch bar 301 on the mobile terminal 302 in the embodiment shown in FIG. 3 is used as an example to describe the "flick-up operation" and the "flick-down operation" in the embodiment of the present invention. The touch bar 301 divided into an upper half part and a lower half part in the embodiment shown in FIG. 3 is used as an example to describe the "first area tap operation" and the "second area tap operation", where the tap operation of the user in the upper half part is the "first area tap operation" and the tap operation of the user in the lower half part is the "second area tap operation". In an actual application, names of touch operations performed by the user may be determined according to actual conditions, and are not limited herein.

In the embodiment of the present invention, after the processor 303 determines the touch operation performed by the user according to the position information and direction information included in the received sensing information, the processor 303 may further, according to the touch operation performed by the user and the content currently displayed on the display module 305 of the mobile terminal, control a page displayed on a browser of the display module to flick up, or control the page on the browser of the display module to flick down, or control the display module to display a previous page of a document, or control the display module to display a next page of the document, or control the sound module to increase volume, or control the sound module to decrease the volume. Specifically, for example, after the processor 303 receives the sensing information including the position information and direction information, if it is determined, by using the position information and direction information, that the touch operation performed by the user is a flick-up operation, and the content currently displayed on the display module 305 of the mobile terminal 302 is a browser page, the processor 303 controls the page displayed on the browser of the display module 305 to flick up; if it is determined, by using the position information and direction information, that the touch operation performed by the user is a flick-down operation, and the content currently displayed on the display module 305 of the mobile terminal 302 is a browser page, the processor 303 controls the page displayed on the browser of the display module 305 to flick down; if it is determined, by using the position information and direction information, that the touch operation performed by the user is a flick-up operation, and the content currently displayed on the display module 305 of the mobile terminal 302 is a document page, the processor 303 controls the display module 305 to display a previous page of the document; if it is determined, by using the position information and direction information, that the touch operation performed by the user is a flick-down operation, and the content currently displayed on the display module 305 of the mobile terminal 302 is a document page, the processor 303 controls the display module 305 to display a next page of the document; if it is determined, by using the position information and direction information, that the touch operation performed by the user is a flick-up operation, and the content currently displayed on the display module 305 of the mobile terminal 302 is a music playing interface, the processor 303 controls playing a previous audio segment and controls the display module 305 to enter a playing interface of the previous audio segment; if it is determined, by using the position information and direction information, that the touch operation performed by the user is a flick-down operation, and the content currently displayed on the display module 305 of the mobile terminal 302 is a music playing interface, the processor 303 controls playing a next audio segment and controls the display module 305 to enter a playing interface of the next audio segment; if it is determined, by using the position information and direction information, that the touch operation performed by the user is a flick-down operation, and the content currently displayed on the display module 305 of the mobile terminal 302 is a home page, the processor 303 controls the sound module 306 to decrease the volume; if it is determined, by using the position information and direction information, that the touch operation performed by the user is a flick-up operation, and the content currently displayed on the display module 305 of the mobile terminal 302 is a home page, the processor 303 controls the sound module 306 to increase the volume; if it is determined, by using the position information and direction information, that the touch operation performed by the user is a second area tap operation, and the content currently displayed on the display module 305 of the mobile terminal 302 is a document page, the processor 303 controls the display module 305 to display a next page of the document; if it is determined, by using the position information and direction information, that the touch operation performed by the user is a first area tap operation, and the content currently displayed on the display module 305 of the mobile terminal 302 is a document page, the processor 303 controls the display module 305 to display a previous page of the document; if it is determined, by using the position information and direction information, that the touch operation performed by the user is a first area tap operation, and the content currently displayed on the display module 305 of the mobile terminal 302 is a music playing interface or a home page, or the mobile phone is in a music playing state but not in the music playing interface, the processor 303 controls the sound module 306 to increase the volume; if it is determined, by using the position information and direction information, that the touch operation performed by the user is a second area tap operation, and the content currently displayed on the display module 305 of the mobile terminal 302 is a music playing interface or a home page, or the mobile phone is in a music playing state but not in the music playing interface, the processor 303 controls the sound module to decrease the volume.

In the embodiment of the present invention, when a user uses a browser of the mobile terminal 302 to browse pages, the user may perform a touch operation on the touch panel 102 of the touch bar 301, so as to control the content displayed on the page of the browser to flick up or down, and when reading a document, the user may also page down in an ebook by using a touch operation on the touch panel 102; the user may also increase or decrease the volume by using a touch operation on the touch panel 102.

It should be noted that, in the embodiment of the present invention, a manner in which the processor 303 controls the mobile terminal 305 and the sound module 306 according to the touch operation performed by the user and the content currently displayed on the display module 305 of the mobile terminal 302 may be preset according to specific conditions, and the processor 303 may also learn the manner according to a use habit of the user. Therefore, in actual application, the manner in which the processor controls the mobile terminal according to the touch operation performed by the user and the content currently displayed on the display module 305 of the mobile terminal 302 is not limited herein.

In the embodiment of the present invention, by using a mobile terminal apparatus, a user is capable of controlling a mobile terminal by using a touch operation on a touch panel of a touch bar, for example, implement functions such as flicking a browser page up and down, turning pages of a document, and adjusting volume; the operability is enhanced, and the user experience is prevented from being affected because the screen is blocked due to a tap operation or flick operation of the user, improving the user experience effectively.

The touch bar and mobile terminal apparatus provided in the present invention are described in detail above. Persons of ordinary skills in the field could make alterations to the specific implementation manner and application scope based on the idea of the embodiments of the present invention. In sum, the content of the specification should not be construed as a limit to the present invention.

## Claims

1. A touch bar, comprising:
an interface module and a touch panel, the interface module being connected to the touch panel, wherein
the interface module is configured to connect a matching interface on a mobile terminal; and
the touch panel is configured to sense a touch operation of a user on the touch panel, generate a corresponding sensing signal, and transmit the sensing signal to a processor in the mobile terminal by using the interface module, so that the processor controls the mobile terminal according to the sensing signal and content currently displayed on a display interface of the mobile terminal.

2. The touch bar according to claim 1, wherein the touch panel is a touch sensor.

3. The touch bar according to claim 1, wherein the interface module is a universal serial bus USB interface or a universal asynchronous receiver/transmitter UART interface.

4. The touch bar according to claim 1, wherein the touch operation is a tap operation or a flick operation.

5. The touch bar according to any one of claims 1 to 4, wherein the sensing signal comprises position information and direction information, so that the processor determines a touch operation performed by the user according to the position information and direction information comprised in the sensing signal, wherein the position information is used to describe a position area of the touch operation of the user on the touch panel, and the direction information is used to describe a direction of the touch operation of the user on the touch panel.

6. The touch bar according to claim 5, wherein the processor is further configured to, according to the touch operation performed by the user and the content currently displayed on the display interface of the mobile terminal, control a page displayed on a browser of the mobile terminal to flick up, or control the page on the browser of the mobile terminal to flick down, or control the display interface of the mobile terminal to display a previous page of a document, or control the display interface of the mobile terminal to display a next page of the document, or control the mobile terminal to increase volume, or control the mobile terminal to decrease the volume.

7. A mobile terminal apparatus, comprising:
a touch bar and a mobile terminal, wherein
the touch bar comprises an interface module and a touch panel, the interface module being connected to the touch panel;
the mobile terminal comprises a processor and a terminal interface, the terminal interface being connected to the interface module, where the interface module matches the terminal interface;
the touch panel is configured to sense a touch operation of a user on the touch panel and generate a corresponding sensing signal, and is configured to transmit the sensing signal to the processor by using the interface module and the terminal interface; and
the processor is configured to control the mobile terminal according to the sensing signal and content currently displayed on a display interface of the mobile terminal.

8. The mobile terminal apparatus according to claim 7, wherein the interface module is a universal serial bus USB interface or a universal asynchronous receiver/transmitter UART interface.

9. The mobile terminal apparatus according to claim 7, wherein the touch panel is a touch sensor.

10. The mobile terminal apparatus according to claim 7, wherein the interface module is connected to the terminal interface in a pluggable way.

11. The mobile terminal apparatus according to claim 7, wherein the touch operation is a tap operation or a flick operation.

12. The mobile terminal apparatus according to any one of claims 7 to 11, wherein the mobile terminal further comprises a display module, and the display module is configured to display content shown to the user;
the sensing signal comprises position information and direction information; the processor is configured to determine the touch operation performed by the user according to the position information and the direction information comprised in the sensing signal, and control a page displayed on a browser of the display module to flick up, or control the page on the browser of the display module to flick down, or control the display module to display a previous page of a document, or control the display module to display a next page of the document according to the touch operation performed by the user and the content currently displayed on the display module, wherein the position information is used to describe a position area of the touch operation of the user on the touch panel, and the direction information is used to describe a direction of the touch operation of the user on the touch panel.

13. The mobile terminal apparatus according to claim 12, wherein the mobile terminal further comprises a sound module, and sound module is configured to transmit sound to be heard by the user; then, the processor is further configured to control the sound module to increase volume, or control the sound module to decrease volume according to the touch operation performed by the user and the content currently displayed on the display module.

14. The mobile terminal apparatus according to claim 13, wherein the mobile terminal is a tablet computer or a mobile phone.
